(19) Europäisches Patentamt
European Patent Office
Office européen des brevets

(11) Publication number: **0 196 882**
**A1**

(12) **EUROPEAN PATENT APPLICATION**

(21) Application number: 86302274.5

(22) Date of filing: 26.03.86

(51) Int. Cl.⁴: **A 01 B 15/14**

(30) Priority: 26.03.85 GB 8507811

(43) Date of publication of application:
08.10.86 Bulletin 86/41

(84) Designated Contracting States:
DE FR GB NL SE

(71) Applicant: RANSOMES SIMS & JEFFERIES, PUBLIC
LIMITED COMPANY
Nacton Works
Ipswich IP3 9QG Suffolk(GB)

(72) Inventor: Hawes, Richard John
7 Castle Meadow Offton
Ipswich Suffolk(GB)

(74) Representative: Garratt, Peter Douglas et al,
Mathys & Squire 10 Fleet Street
London EC4Y 1AY(GB)

(54) Reversible plough.

(57) A reversible plough has a plough beam (8) connected to the reversing spindle (6) by a main link (7) which is inextensible and carries the majority of the bending, torsion and draft loads. A slide mechanism (11) is provided between the forward part of the plough beam (8) and the spindle (6) and is constructed such that the plough beam may be shifted laterally to adjust the front furrow width without any rotation which would alter the pulling position of the plough. The slide mechanism may provide a curved sliding surface (62).

FIG.1

EP 0 196 882 A1

0196882

REVERSIBLE PLOUGH

This invention relates to reversible ploughs and is particularly concerned with adjustment of the plough frame relative to the headstock.

Reversible ploughs have been proposed in which a slide mechanism is interposed between the plough frame and the reversing spindle so that the frame can be moved bodily with respect to the headstock in the lateral direction, to change the front furrow width. Reference is made - for example - to GB-A-2 082 892 and FR-A-2 366 779. The use of a slide has the merit of simplicity, particularly since the desired lateral shift can be obtained without consequential rotation of the plough frame. The proposed designs have tended to be expensive however since, unless the plough is of the special type shown in GB-A-2 082 882 which has a wheeled stabiliser continuously engaging the ground, the slide mechanism must be of sufficient substance to accommodate the draft and bending loads encountered during normal ploughing and the torsional load imposed during reversal. The cost penalty of course increases as the size of plough increases. Moreover, a further difficulty is encountered if it is desired to provide for automatic front furrow width adjustment during ploughing, since the slide mechanism must be of sufficiently low friction to operate satisfactorily under the imposed loads.

It is an object of this invention to provide an improved reversible plough in which the front furrow width may be adjusted without excessive penalties in manufacturing cost or weight.

Accordingly, the present invention consists in a reversible plough comprising a headstock for connection with a tractor three-point linkage; a reversing spindle mounted for rotation in the headstock about a fore and aft reversing axis; a plough beam carrying left and right handed plough bodies; a main link connected at one end with the reversing spindle and at the other end with an intermediate point in the plough beam, the main link being inextensible and carrying the majority of the bending, torsion and draft loads transmitted between the headstock and the plough beam; an arm connected for rotation with the reversing spindle and extending generally radially thereof and a slide mechanism having inter-engaging parts formed respectively on the arm and on the forward part of the plough frame such that sliding movement between said inter-engaging parts alters the front furrow width.

Advantageously, the slide mechanism and the main link are disposed in respective straight lines which are orthogonal.

Alternatively, said inter-engaging parts are arranged so as to define an arcuate sliding surface.

Preferably, a mechanism is interposed between either the plough beam or the spindle and the associated inter-engaging slide part, adjustment of which mechanism alters the separation in the fore and aft direction between the plough beam and said spindle arm.

This invention will now be described by way of example with reference to the accompanying drawings in which:-

Figure 1 is a part diagrammatic plan view of a reversible plough according to this invention,

Figures 2 and 3 are similar plan views showing the reversible plough in different operating positions,

Figure 4 is a plan view of a modified reversible plough according to this invention,

Figure 5 is a side view of part of the plough shown in Figure 4,

Figure 6 is a scrap view showing a detail of the plough shown in Figure 4, and

Figure 7 is a view similar to Figure 6 showing a further modification.

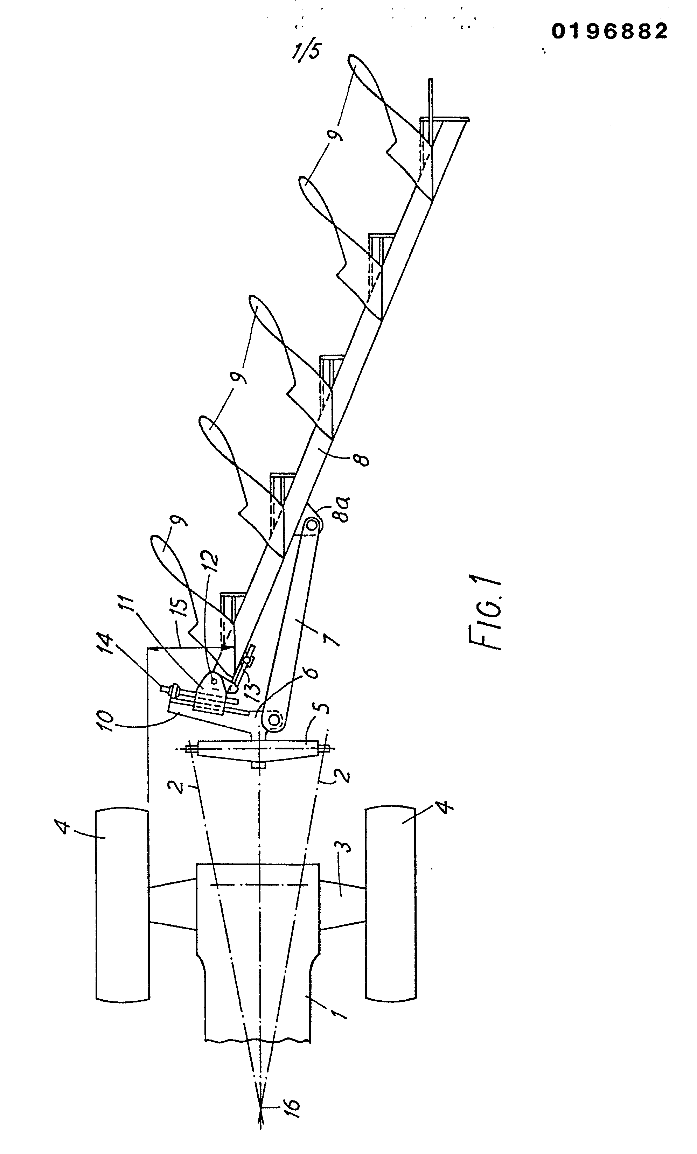

Referring to Figure 1, a tractor is shown diagrammatically having a chassis 1, lower links 2 of a conventional three-point linkage, a rear axle centre line 3 and rear wheels 4. The lower links 2 are pinned at their rear ends to the plough headstock 5 and a reversing spindle 6 is mounted in this headstock for rotation about a fore and aft reversing axis. A main link 7 which is inextensible is pivotally connected at the forward end to the reversing spindle 6 and pivotally connected at the rearward end to a bracket 8a formed intermediate the length of the plough beam 8. The main link 7 and the associated pivot pins are of substantial form and serve to carry the majority of the bending, draft and torsional loads transmitted during ploughing or reversal between the headstock 5 and the plough beam 8. The plough beam 8 carries in conventional fashion left and right handed plough bodies 9.

An arm 10 is formed integrally with the reversing spindle and extends generally radially of the reversing axis. A bracket 11 is arranged to slide along the arm 10 through a tongue and groove formation (not shown). The arm 10 and the sliding surface along which the bracket 11 moves are disposed so that the straight line defined by the slide mechanism is orthogonal to the length of the main link 7, when that main link is in the position corresponding with the mid-range position of the slide mechanism.

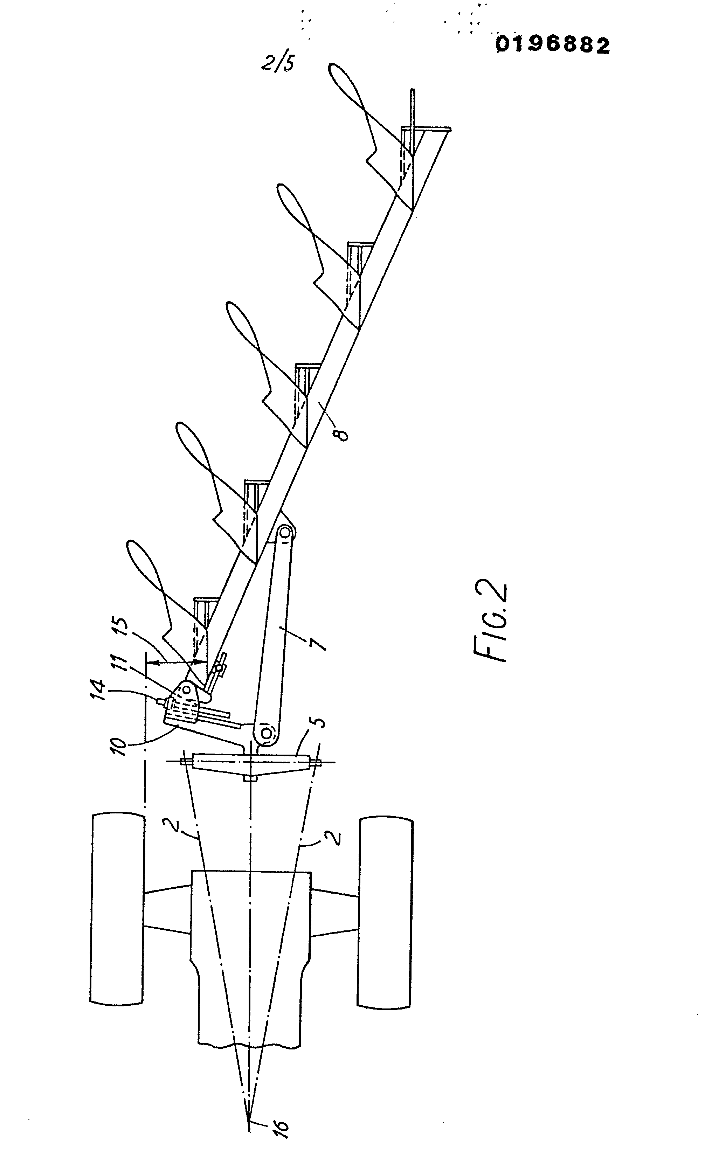

The forward end of the plough beam 8 is connected to the bracket 11 through the intermediary of an eccentrically mounted pin 12.  The pin 12 may be rotated relative to the plough beam by a screw mechanism 13 and the effect and purpose of this adjustment will be described hereinafter.  A further screw mechanism 14 is provided on the arm 10 to effect sliding movement of the bracket 11 relative to the arm 10.  It will be appreciated that such an adjustment will shift the plough beam bodily in the lateral direction to change the tractor front furrow width 15.  Since the direction of sliding movement is approximately perpendicular to the length of the main link 7, there will be little or no rotation of the plough frame relative to the headstock.  This has the useful result that the front furrow width 15 may be altered without changing the pulling position, where the pulling position is defined as the intersection point 16 of the lines containing the tractor lower links 2.  This adjustment of front furrow width is illustrated in Figure 2 which shows an arrangement in which the bracket 11 has been moved to the outward end of the arm 10 so reducing the front furrow width to a minimum.  In this movement there has been substantially no rotation of the plough bodies and therefore no movement of the tractor lower links and thus the pulling position.

**0196882**

If adjustment of the pulling position is required, because - for example - there is an unwanted steering reaction on the tractor or because the plough bodies are not running in the correct orientation through the ground, the screw 13 is operated.   This serves to rotate the eccentric 12 with the effect that the plough beam is moved toward or away from the headstock in a direction along its length.   With link 7 being of course of fixed length, the result is to angle the plough beam and cause the headstock 5 to adopt a new position in the path to which it is constrained by the lower links 2.   Whilst the desired correction of pulling position can be made in this way, there will be a consequential, and usually unwanted, change in front furrow width.   This can be restored to its correct value through adjustment of the slide mechanism as described above.

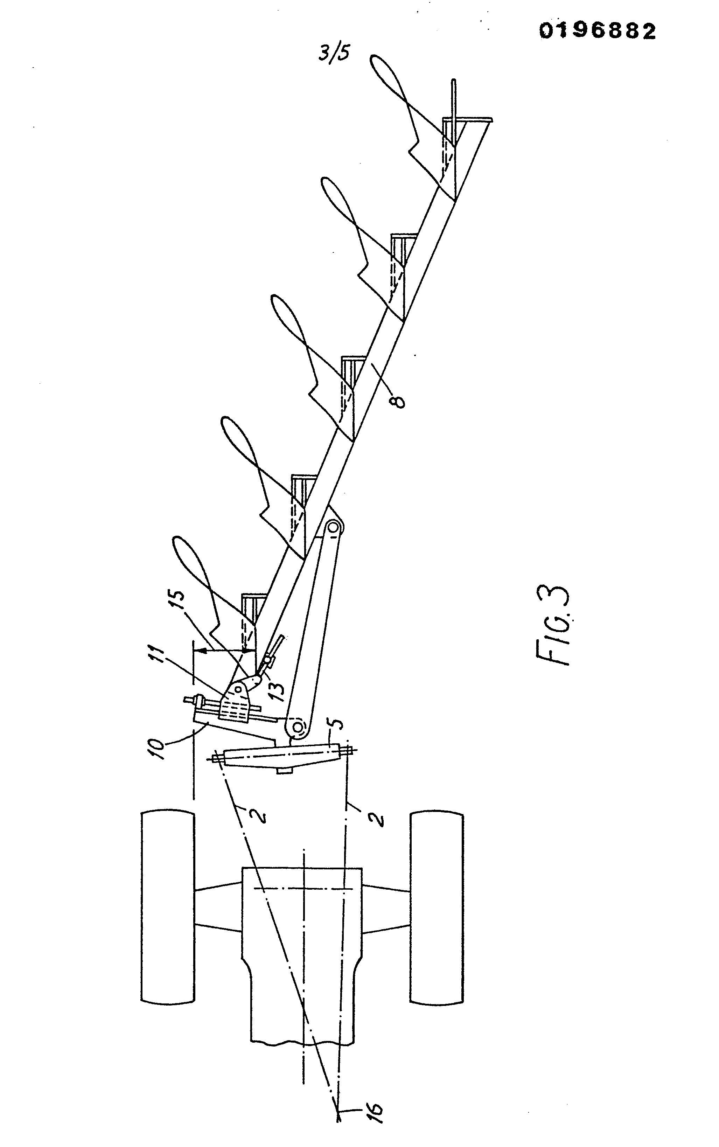

The effect of an adjustment of eccentric 12 is illustrated in Figure 3.   The plough beam has been displaced away from the bracket 11 causing a rotation effectively about axis of the eccentric.   Because the bodies will tend to maintain their alignment in the ground, the headstock will rotate an amount equal to the change in beam angle but in an opposite sense. The resulting change in pulling position 16 is clearly evident in the drawing.   The unwanted change in front furrow width 15 is removed through subsequent adjustment of the bracket 11 along the arm 10.

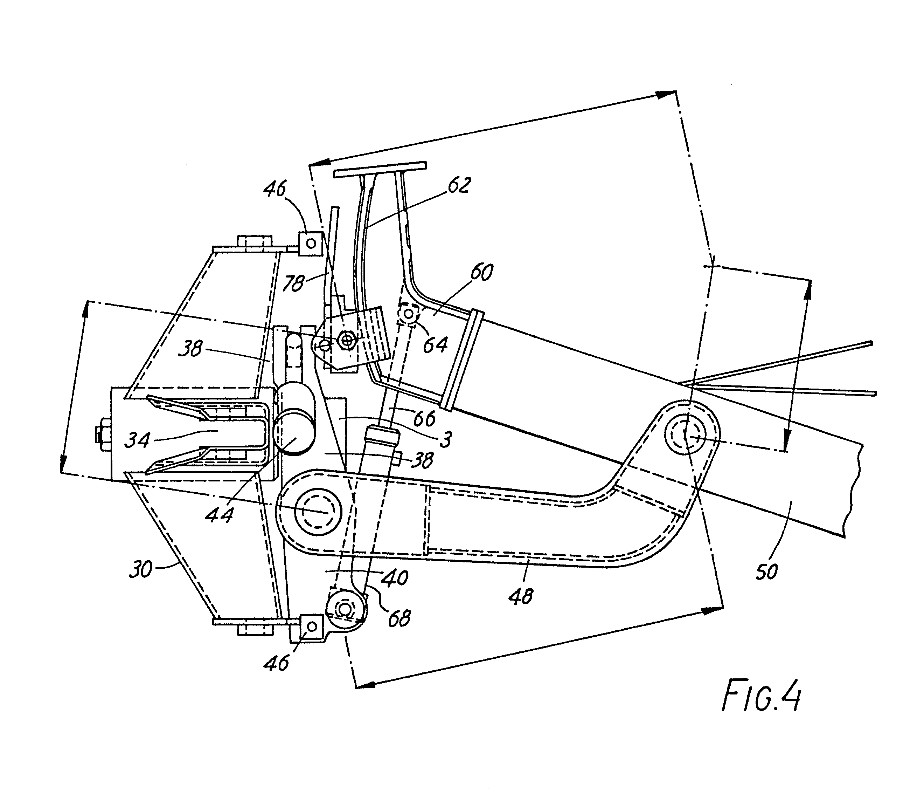

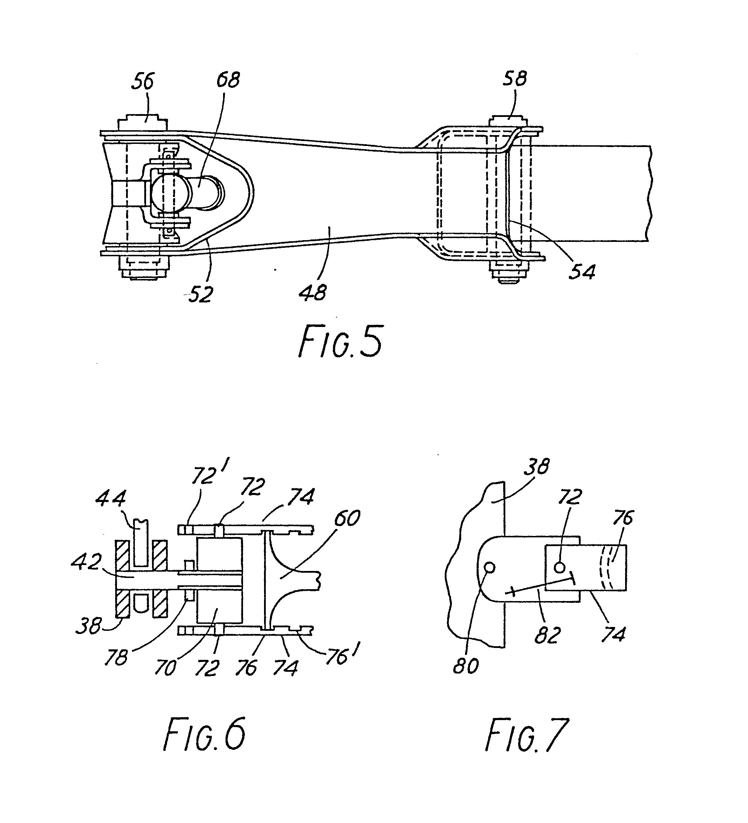

A further embodiment of this invention is illustrated in Figures 4, 5 and 6.   The plough headstock 30 is adapted in conventional manner for connection to a tractor three-point linkage.   Connection points 32 are provided for the tractor lower links and an upper connection point 34 is provided for the third link.   A reversing spindle 36 is mounted in the headstock 30 for rotation about a fore and aft axis.   Rearwardly of the headstock, the reversing spindle 36 carries an integrally formed spindle arm 37 which extends in opposite radial directions with a short section 38 and a long section 40.   Arm section 38 is bifurcated to receive a pin 42 (seen best in Figure 6) which serves as the connection point of one end of the hydraulic turnover ram 44. The opposite end of the ram is secured to the headstock close to the top connection 34.   In the usual manner, the turnover ram 44 can be used to rotate the reversing spindle and thereby the plough frame to bring an opposite handed set of plough bodies into operation.   The extremity of the long arm section 40 is formed as an abutment which engages wing stops 46 carried at opposite sides of the headstock.

A cranked main link 48 of substantial rigid construction is pivotally connected at one end to the long spindle arm section 40 and at the other end to the plough beam 50.   As seen best in Figure 5, the link 40 is predominantly of open box section with the two ends being closed by U-shaped pieces 52 and 54.   With the extended top and bottom walls of the box construction, these U-shaped pieces define respective clevis type joints within which the spindle arm section 40 and the plough beam 50 are respectively received.    Substantial pins 56 and 58 complete the pivotal interconnections.

The front end of the plough beam 50 carries a slide extension 60 which may conveniently be formed as a casting. The extension 60 defines a vertical flange 62 which, in the horizontal plane, defines a circular arc.   The extension 60 also provides an anchorage 64 for the piston 66 of an adjusting ram 68 which in turn is pivotally connected to the free end of the long spindle arm section 40.

Referring to Figures 4 and 6, the pin 42 extends rearwardly beyond the short spindle arm section 30 and is threaded.   A trunnion block 70 is threadingly engaged on the pin 42 so as to be adjustable in position towards and away from the short spindle arm section 38 on rotation of the pin 42.   Vertically directed trunnions 72 on the block 70 provide a vertical pivot axis for a pair of slide plates 74.   In their mutually opposing surfaces, these slide plates 74 are formed with circular grooves which receive the flange 62 of the sliding extension 60.

It will be understood that through actuation of the adjusting ram 68, the slide extension 60 may be moved relatively to the slide plates 74.   The centre of radius of the flange 62 is determined by the dimensions A and B shown in Figure 4 to the end that sliding movement produces parallel lateral adjustment of the plough beam.   The dimension A is selected to be equal to the separation of the pivot pins 56 and 58 whilst the dimension B is the separation of the trunnions 72 and the pivot pin 56.

Whilst it is considered in present circumstances that pure

0196882

lateral adjustment is to be preferred, it will be understood that alternative positions for the centre of radius and for the value of the radius itself can give different characteristics to the adjustment.

If it is desired to make a small change in the angle of the plough beam to adjust the pulling position, for the reasons described above in relation to the first embodiment, the pin 42 may be rotated so as to drive the trunnion block 70 toward or away from the spindle arm 38, as appropriate. To assist in this adjustment, a lever arm 78 is provided which can be locked for rotation with the pin 42.

It will be understood that the desired number of plough body pairs are mounted in any convenient fashion upon the plough beam 50. A suitable formation may be provided on the slide extension 60 to receive the foremost plough body pair. The mounting of the plough bodies may be such as to enable manual adjustment of the angle between the plough bodies and the plough beam so as to alter the furrow width. If this adjustment is made, an equal and opposite adjustment must of course be made to the angle of the plough beam 50. Since this adjustment will usually exceed that required to be provided for correction of the pulling position, it is convenient to provide a separate means of adjustment distinct from the threaded link 42. Referring to Figures 4 and 6, it will be seen that the slide plates 74 each carry an alternative aperture 72' for the trunnion 72 and an alternative circular groove 76'. By utilising the correct combination of apertures and grooves, the distance between the front

0196882

end of the beam and the reversing spindle (and accordingly the angle of the plough beam 50) can be adjusted to conform with the furrow width adjustment. Any fine correction which is required can of course be provided through the threaded link 42.

An alternative mechanism for adjusting the angle of the plough beam is illustrated in Figure 7. In this variation, the trunnion block 70 is not mounted on the pin 42 but is pivotally connected to the spindle arm 38 for rocking about a vertical axis 80. The slide plates 74 are mounted, as before, on trunnions 72 and a screw thread arrangement 82 (shown diagrammatically) is provided to enable manual adjustment of the angle between the slide plates and the trunnion. It will be appreciated that this angular adjustment effectively alters the separation between the spindle arm and the arc along which sliding movement occurs. The coarse adjustment which is required to accommodate changes in furrow width may, as before, be provided through alternative circular grooves in the slide plates 74.

It should be understood that this invention has been described by way of examples only and a variety of modifications are possible without departing from the scope of the invention. Thus, the described spindle arm need not be formed integrally with the reversing spindle and may comprise part of a sub-frame arranged to rotate with the reversing spindle. In certain cases, there may be no requirement for the described adjustment mechanism acting between one of the inter-engaging slide parts and the spindle or beam, as appropriate. If employed, the adjustment mechanism could of course take a variety of forms beyond those specifically described, however, the arrangements shown in Figures 1 and 7 which employ an eccentric type of adjustment are believed to be preferable in that they are relatively simple and are easily operated manually to provide the relatively small degree of adjustment that is required.   It will be understood that the relative disposition of the eccentrically interconnected parts can be altered; for example in Figure 7, the screw thread adjustment 82 may also be provided between the trunnion block 70 and the spindle arm 38.

As noted above, in the case of a curved slide arrangement, the radius and centre of curvature can be adjusted to provide parallel adjustment of the plough beam, rotation of the plough beam about a centre behind the plough or rotation about a forward point lying, for example, on the lower tractor links intersection.

0196882

CLAIMS

1.      A reversible plough comprising a headstock for connection with a tractor three-point linkage; a reversing spindle mounted for rotation in the headstock about a fore and aft reversing axis; a plough beam carrying left and right handed plough bodies; a main link connected at one end with the reversing spindle and at the other end with an intermediate point in the plough beam, the main link being inextensible and carrying the majority of the bending, torsion and draft loads transmitted between the headstock and the plough beam; an arm connected for rotation with the reversing spindle and extending generally radially thereof and a slide mechanism having inter-engaging parts formed respectively on the arm and on the forward part of the plough frame such that sliding movement between said inter-engaging parts alters the front furrow width.

2.      A plough according to Claim 1 wherein the slide mechanism and the main link are disposed in respective straight lines which are orthogonal.

3.      A plough according to Claim 1 wherein the slide mechansim provides for sliding movement about an arc.

4.      A plough according to Claim 3 wherein the centre and radius of curvature of said arc are selected to provide lateral shift of the plough beam without rotation.

5.      A plough according to any one of the preceding claims, wherein an adjusting mechanism is interposed between the associated inter-engaging slide part and either the plough beam or the spindle arm, adjustment of said mechanism serving to alter the separation in the fore and aft direction between the plough beam and said spindle arm.

6. A plough according to Claim 5 wherein said mechanism includes an eccentrically mounted part and adjustment means for rotating said part.

FIG.1

FIG.2

0196882

FIG.3

0196882

FIG.4

0196882

FIG.5

FIG.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | GB-A-2 119 614 (KVERNALAND A/S) <br> * Page 1, line 67 - page 2, line 7; figure 1 * | 1 | A 01 B 15/14 |
| A | | 3 | |
| Y | DE-A-3 107 137 (BRENIG) <br> * Whole document * | 1 | |
| A | | 5,6 | |
| A | DE-A-3 320 202 (EBERHARDT PFLUGFABRIK GMBH) <br> * Page 7, last paragraph - page 9, last paragraph; figures 1,2 * | 1,2 | |
| A | GB-A-2 144 312 (VOGEL & NOOT LANDMASCHINENFABRIK GESELLSCHAFT GMBH) | | TECHNICAL FIELDS SEARCHED (Int Cl 4) <br><br> A 01 B |

The present search report has been drawn up for all claims

| Place of search | Date of completion of the search | Examiner |
|---|---|---|
| THE HAGUE | 12-06-1986 | VERDOODT S.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82